# EUROPÄISCHE PATENTSCHRIFT

(11) **EP 0 742 503 B1**
(45) Veröffentlichungstag und Bekanntmachung des Hinweises auf die Patenterteilung: **23.08.2000**
(21) Anmeldenummer: 96107451.5
(22) Anmeldetag: 10.05.1996
(51) Int. Cl.: G05B 19/4063

(54) **Einrichtung zur numerischen Steuerung einer Werkzeugmaschine oder eines Roboters**
Numerical control device for a machine-tool or a robot
Dispositif pour la commande numérique d'une machine-outil ou d'un robot

(30) Priorität: 11.05.1995 DE 19517377
(43) Veröffentlichungstag der Anmeldung: 13.11.1996
(73) Patentinhaber: SIEMENS AKTIENGESELLSCHAFT, 80333 München (DE)
(72) Erfinder: Brune, Richard Dipl.-Ing., 90765 Fürth (DE); Hauf, Ronald Dipl.-Ing., 91096 Möhrendorf (DE); Hertinger, Klaus Ing.(FH), 91056 Erlangen (DE); Schmittele, Max Dipl.-Ing., 91058 Erlangen (DE); Schick, Ludwig, 91091 Grossenseebach (DE); Schleicher, Siegfried Dr.-Ing., 09113 Chemnitz (DE); Schwesig, Günter Dilp.-Ing., 91054 Erlangen (DE)

(56) Entgegenhaltungen:
- EP-A- 0 352 759
- EP-A- 0 443 384
- DE-A- 3 007 735
- DE-A- 3 902 247
- US-A- 5 067 080

## Beschreibung

Die Erfindung bezieht sich auf eine Einrichtung zur numerischen Steuerung einer Werkzeugmaschine oder eines Roboters mit sicherheitsgerichteter Überwachung mindestens einer Achse, wobei die Lageregelung und daraus ableitbare Regelungen, wie die Drehzahl- und Geschwindigkeitsregelung, sowie Überwachungen weiterer Überwachungsgrößen in zwei Kanälen getrennte Prozessoren und getrennte Istwerterfassungssysteme aufweisen.

Eine solche Einrichtung ist prinzipiell aus der EP-A-0 658 832 bekannt. Dieser Stand der Technik beschreibt eine sicherheitsgerichtete Achspositionsüberwachung, bei welcher der Einsatz bis dato notwendiger Endlagenschalter wegfällt. Diese Lösung ist einsetzbar, wenn am Antrieb zwei unterschiedliche Positionserfassungsysteme, also ein Absolut- und ein Inkrementalsystem, angreifen.

Durch das Absolutsystems für einen ersten Positionserfassungskanal wird nach dem Einschalten sofort der Zustand "referenziert" erreicht und zwar ohne Achsbewegung zu einem Referenzpunkt. Der so ermittelte Einschaltanfangswert ist als absoluter Meßwert auf den Achsnullpunkt bezogen.

Im zweiten Positionserfassungskanal wird dabei ein Inkrementalsystem eingesetzt, bei dem nach dem Steuerungseinschalten der Zustand "referenziert" erst durch Setzen des im ersten Kanal ermittelten absoluten Istwertes erreicht wird. Für das damit in den Zustand "referenziert" gesetzte Inkrementalsystem ist nun der Meßwert auch auf den Achsnullpunkt bezogen. Im weiteren wird im inkrementalen Kanal für jeden neuen Meßzeitpunkt dann der aktuelle absolute Meßwert durch Zuaddieren des jeweils neu ermittelten Inkrementwertes gewonnen.

Weil die heute bekannten Absolutmeßsysteme nur eine geringe Auslesehäufigkeit aufweisen, kann ihr absoluter Meßwert nur in diesen großen Zeitabständen verarbeitet werden. Die Folge ist, daß die damit realisierten Regelungen oder überwachungen nicht sehr dynamisch sind, d.h. große Totzeiten aufweisen. Die hochdynamischen Lageregelungen und die digitalen Drehzahlregelungen in modernen numerischen Steuerungssystemen werden deshalb ausschließlich mit inkrementaler Meßwerterfassung ausgeführt. Ein Absolutgeber wird dabei nur beim Einschalten der Steuerung zum Referenzieren des Inkrementalsystems benutzt.

Beim gattungsbildenden Stand der Technik müßte daß der Absolutgeber so angebaut werden, daß sein Nullpunkt mechanisch auf dem Achsnullpunkt sitzt und er selbst immer fehlerfrei arbeitet. Die beschriebenen Fehleraufdeckungsmaßnahmen sind nämlich nicht dafür ausgelegt, einen Anbaufehler oder einen Geberfehler, der einen konstanten Versatz produziert, aufzudecken.

Die heute gebräuchliche Praxis ist aber, den Absolutgeber ohne Berücksichtigung des Übereinanderliegens von Achsnullpunkt und Gebernullpunkt anzubauen. Bei der Inbetriebnahme wird dann der Absolutoffset als Abstand des Absolutgebernullpunkts zum Achsnullpunkt ermittelt und gespeichert. Beim eigentlichen Meßvorgang wird zur Ermittlung des absolutem Positionswertes nun der gespeicherte Absolutoffset dem Meßwert des Absolutgebers zuaddiert.

Die Sicherheit der seit langem geläufigen Lösung mit Endschaltern kann somit von der eingangs genannten Einrichtung für die gewünschte leichte Gebermontage nicht voll erreicht werden.

Nun könnten zwar bei Wegfall der Endschalter und freier Gebermontage Absolutgeber mit höherer Auslesehäufigkeit verwendet werden, was einen hohen technischen Aufwand bedeuten würde, oder es ist ein völlig neuer Lösungsweg zu beschreiten, bei der die gegebene Auslesehäufigkeit der üblichen Absolutgeber die angestrebte Sicherheit bietet. Für höchste Sicherheitserfordernisse, wie sie die deutsche Berufsgenossenschaft fordert, muß ferner ein fehlerhafter Positionsistwert des Absolutgebers, dessen Ursache in einem fehlerbehafteten Absolutoffset oder Geberfehler liegt, sicher erkannt werden.

Aufgabe der vorliegenden Erfindung ist es, bei einer Einrichtung der eingangs genannten Art eine höchste Sicherheit zu gewährleisten, ohne daß besondere Gebersysteme neu zu entwickeln sind.

Da der Wegfall von Endlagenschalter ganz generell vorteilhaft ist, kann dieser Nutzen für beliebige Geberanbauorte an der Achse (direkt, indirekt, oder halb direkt/halb indirekt) und beliebige Geberkombinationen (Absolutgeber/Absolutgeber, Inkrementalgeber/Inkrementalgeber und gemischt Absolutgeber/Inkrementalgeber aber auch Inkrementalgeber/Absolutgeber) realisiert werden.

Gemäß der Erfindung wird die obengenannte Aufgabe durch das Kennzeichen des Hauptanspruchs gelöst.

Dabei ist es durch die Erfindung auch möglich, daß die bislang notwendigen Endschalter auch dann wegfallen können, wenn nur Inkrementalgeber zum Einsatz kommen, weil dann für die Überwachung die gleiche Dynamik wie bei den hochdynamischen Lageregelungen und digitalen Drehzahlregelungen in modernen numerischen Steuerungssystemen erreicht werden kann.

Es ist auch sehr vorteilhaft, daß die bislang notwendigen Endschalter auch dann wegfallen können, wenn der Anbauort beider Inkrementalgeber nicht mehr auf den Antrieb beschränkt ist, sondern frei nach den gegebenen Erfordernissen von Maschine und den auch noch damit zu realisierenden Regelsystemen wird.

Neben dem Wegfall der bislang notwendiger Endlagenschalter ist es von weiterem großem Vorteil, daß auch weitere bislang notwendige neben der numerischen Steuerung separat realisierte sicherheitsgerichtete Achsüberwachungen, wie für sicheren Achsstillstand, sichere Einrichtegeschwindigkeit oder auch das Überwachen einer technologischen Drehzahlbegrenzung oder Geschwindigkeit als separate Baugruppen wegfallen können.

Weitere vorteilhafte Ausgestaltungen der Erfindung entsprechend den Unteransprüchen werden im Zusammenhang mit dem Ausführungsbeispiel noch herangearbeitet.

Ein Ausführungsbeispiel der Erfindung ist in der Zeichnung dargestellt und wird im folgenden näher erläutert. Dabei zeigen:
FIG 1 ein Blockschaltbild,
FIG 2 eine erste Gebervariante und
FIG 3 eine zweite Gebervariante.

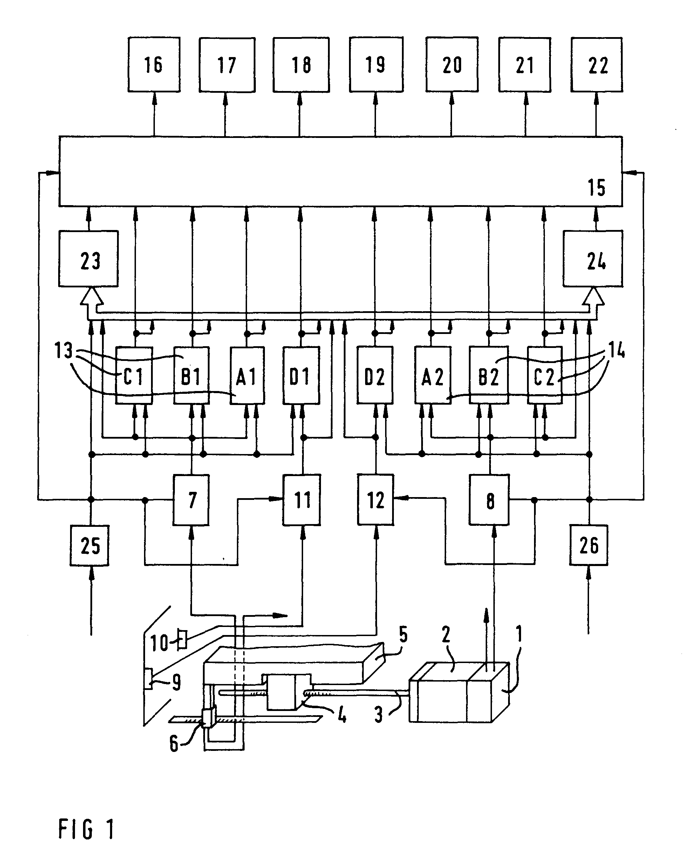

Die Darstellung gemäß FIG 1 zeigt in Form eines Blockschaltbilds mit Signalflußpfeilen den wesentlichen zweikanaligen Aufbau einer Achszustandsüberwachung für drei verschiedene Achszustandsgrößen. Beim linken Kanal kann es sich dabei für die Überwachung 13 um Positionsüberwachung A1 (auch hinsichtlich Endlage und Nocken), die Geschwindigkeitsüberwachung B1 und die Beschleunigungsüberwachung C1 handeln. Entsprechendes gilt für die Überwachung 14 des rechten Kanals mit Positionsüberwachung A2, Geschwindigkeitsüberwachung B2 und Beschleunigungsüberwachung C2. Beim hier gezeigten Zweigebersystem kommen zwei inkrementale Gebersysteme zum Einsatz, ein direkt angebauter Lineargeber 6 an einem Tisch 5 und ein indirekt angebauter rotatorischer Geber 1 an einem Motor 2.

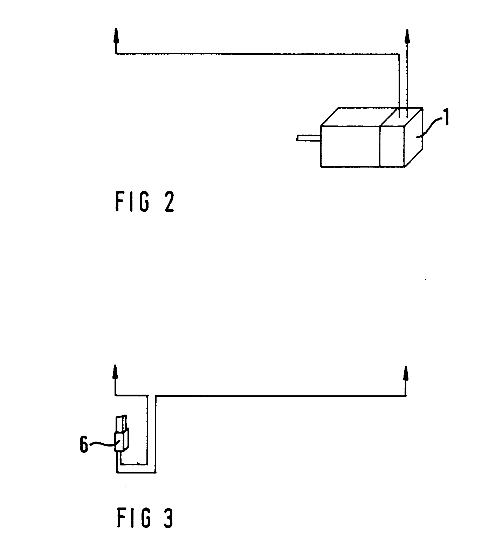

In FIG 2 und FIG 3 sind auch Ein-Gebervarianten vom Prinzip her dargestellt, welche auch mögliche sind und bei denen quasi in einem Geber 1 oder 6 zwei voneinander unabhängige Istwerterfassungskanäle realisiert sind.

Zurück zu FIG 1. Der Antrieb des Tisches 5 erfolgt über eine Mutter 4 auf einer vom Motor 2 angetriebenen Spindel 3. Der Lineargeber 6 kann optisch auf Strichcodes eines Maßstabes ansprechen. Beim Beispiel gemäß FIG 1 wird, anders als bei den im Zusammenhang mit FIG 2 und FIG 3 erwähnten Varianten, die eigentliche Istwertbildung zur erforderlichen Istwertauflösung und zum weiterverarbeitbaren Datenformat in einer kanaleigenen Istwerteinheit 7 bzw. 8, deren Ausgang auf die Eingänge der einzelnen Überwachungen 13 und 14 für drei verschieden Achsüberwachungsgrößen, beispielsweise Endlagen, Geschwindigkeit und Beschleunigung, geschaltet ist.

Die inkrementellen Ausgangssignale der Geber 1 und 6 können den Lageistwert noch nicht absolut angeben. Die Inkremental-Istwerteinheit 7 bzw. 8 benötigt daher zur Istwertbildung der absoluten Tischposition neben dem Istwertsignal noch Daten zur Auflösungsumrechnung sowie zum Referenzieren, um den beliebigen Gebernullpunkt bzw. Referenzpunkt zum Achsnullpunkt mittels Referenzpunktwert anzupassen. Die Überwachungen A1, A2, B1, B2, C1 und C2 der Überwachungen 13 und 14 benötigen ferner noch den jeweiligen Überwachungssollwert. Diese Parameter- und Überwachungsdaten werden von zwei voneinander unabhängigen, kanalzugeordneten Speicherblöcken 25 und 26 bereitgestellt. Die Eingabe der zu speichernden Werte (Solllagen, Referenzpunkte, Achs- und Offsetparameter, Auflösung) erfolgt mittels getrennter, ebenfalls voneinander unabhängiger Eingaben, z.B. manueller Eingaben. Diese Zweikanaligkeit ist hier durch den sicherheitsrelevanten Einfluß dieser Daten notwendig. Die Sicherheitsrelevanz beschränkt sich nicht nur auf den Absolutoffset bzw. Referenzpunktwert zur Absolutpositionsbildung. Ein fehlerhaft nur einkanalig bereitgestellter Umrechnungsparameter würde auch bei einer Geschwindigkeitsüberwachung zum Sicherheitsverlust führen. Ferner können in den Speicherblöcken 25 und 26 auch die Programmierdaten für eine programmierbare Anwahlschaltung, auf die im folgenden noch eingegangen wird, abgelegt sein.

Wenn noch in einer jeweils vierten Überwachung D1 bzw. D2 die Achsdrückkraft gegen einen Festanschlag überwacht werden soll, dann kämen als Istwerterfassungsgeber noch zwei Kraftgeber 9 und 10 zum Einsatz, deren Ausgang gleichfalls über kanaleigene Istwerteinheiten 11, 12 der vierten Überwachung D1 bzw. D2 aufgeschaltet würden. Die Sollwerte und Parameter werden den Speicherblöcken 25 und 26 entnommen. Weil damit das Strukturprinzip erklärt ist, wird diese vierte Überwachung im weiteren nicht weitergehend betrachtet.

Die beiden Inkrementalgeber 1 und 6 haben je einen hier nicht dargestellten Referenzpunktgeber, auf den sie beim Referenzieren hingefahren werden. Diese Referenzpunktgeber können zwar als Doppelgeber an der gleichen Stelle sitzen, sie müssen aber in ihrer Funktion gänzlich voneinander unabhängig sein. Am Referenzpunkt angekommen, wird jeweils der gespeicherte kanaleigene Referenzpunktwert gesetzt, womit dieses beiden Istwerterfassungssystem den Zustand "referenziert" erreicht haben. Wird in den Kanalvergleichseinheiten 23, 24, die späten noch beschrieben werden, beim nun beginnenden Kanalvergleich keine Abweichung der beiden unabhängig von einander ermittelten referenzierten Absolutistwerte festgestellt, ist jeder der beiden Istwerte mit dem Ergebnis "fehlerfrei" nachgeprüft. Daraufhin wird erst die Positionsüberwachung überhaupt freigeschaltet. Das hier aufgezeigt Nachprüfen der Absolutistposition im Zustand "referenziert" ist eine sehr sichere Möglichkeit. Es ist mit den beschriebenen technischen Mitteln ausführbar.

Die Ausgangssignale der ersten bis dritten Überwachung A1 bis C2 sind über eine kanaleigene Kanalvergleichseinheit 23 bzw. 24 und den programmierbaren Durchschalter 15 auf eine der Überwachungs-Reaktionseinheiten 16 bis 22 geschaltet. Damit ist es möglich, für unterschiedliche Betriebszustände auch unterschiedliche spezifische STOP-Reaktionen auszulösen.

Je Achsüberwachungskanal ist eine Kanalvergleichseinheit 23 bzw. 24 vorhanden, auf deren Eingänge kreuzweise alle sicherheitsrelevanten Parameter- und Überwachunssollwerte von der Überwachung 13 und 14, die Istwerte der Istwerteinheiten 7 und 8 sowie auch die Ausgangswerte der Überwachungen A1 bis C2 (Ergebniswerte) vom eigenen Kanal als auch vom anderen Kanal aufgeschaltet werden. Die beiden Kanalvergleichseinheiten überprüfen durch kreuzweisen Vergleich der obengenannten Daten die Überwachungsfunktionalität der sicherheitsgerichteten Achszustandsüberwachung. Eine Abweichung beim Vergleich signalisiert, daß die Funktionsfähigkeit und damit die geforderte Sicherheit nicht mehr gegeben ist. Dieser Test wirkt sehr komplex und deckt die negativen Einflüsse der unterschiedlichsten Fehler auf. Aus der Analyse eines Vergleichsergebnislisten-Trace kann auf die Fehlerquelle geschlossen werden. Die Ausgänge der Kanalvergleichseinheiten 23 und 24 ist jeweils gleichfalls über den programmierbaren Anwahlschalter auf eine der vorgebbaren Überwachungs- und Fehler-Reaktionseinheiten 16 bis 22 geschaltet. Damit erfolgt sofort eine entsprechende Abschaltreaktion.

Neben diesen hier aufgezeigten unabdingbaren Maßnahmen zur Selbstüberwachung können die bekannten Überwachungen für Ein- und Mehrprozessorsysteme zur weiteren Erhöhung der Sicherheit angewendet werden, weil sich beide Maßnahmen ergänzen und sich nicht negativ gegenseitig beeinflussen.

Zusammenfassend sei noch zu den Vorteilen der Erfindung gegenüber dem eingangs zitierten Stand der Technik folgendes ausgeführt werden:

### Punkt 1: Beschränkung des Einsatzgebietes auf einen Kombinationsgeber Absolut-/Inkrementalgeber am Antrieb.

Diese Beschränkung besteht nicht mehr, da mit beliebigen Geber, d.h. auch nur mit zwei Inkrementalgebern, gearbeitet werden kann.

### Punkt 2: Beschränkung auf Absolutgeber.

Diese Beschränkung besteht nicht mehr.

### Punkt 3: Beschränkung auf eine geringere Dynamik durch den üblichen Absolutgeber.

Auch diese Beschränkung besteht nicht mehr, da mit zwei Inkrementalgebern gearbeitet werden kann.

### Punkt 4: Beschränkung auf geringere Sicherheit infolge Absolutgeberfehler.

Diese Beschränkung, die durch einen fehlerhaften Absolutwert beim Einschalten infolge Geberfehler entsteht, ist beseitigt, da nach jedem erneuten Erreichen des Positionsistwert-Zustandes "referenziert" die Fehlerfreihet des Istwertes erst festgestellt werden muß, ehe die Freischaltung des Überwachungsbetriebes erfolgt. Damit wird in den Kanalvergleich dieser von ihm nicht aufdeckbare, schon beim Einschalten bestehende Absolutgeber- oder Anbaufehler, nicht eingeschleppt.

### Punkt 5: Beschränkung auf geringere Sicherheit infolge eines fehlerhaft ermittelten Absolutoffset bei der Inbetriebnahme.

Diese Beschränkung, die durch einen fehlerhaften Absolutwert entsteht, ist beseitigt, da nach jedem erneuten Erreichen des Positionsistwert-Zustandes "referenziert" die Fehlerfreihet des Istwertes erst festgestellt werden muß, ehe die Freischaltung des Überwachungsbetriebes erfolgt. Damit wird in den Kanalvergleich dieser von ihm nicht aufdeckbare, schon beim Einschalten bestehende Absolutoffsetfehler, nicht eingeschleppt.

Punkt 6: Beschränkung auf geringere Sicherheit infolge von vor oder während des Überwachungsbetriebes stattfindenden unzulässigen Speicherinhaltsveränderungen für notwendige Daten zur Istwertbildung wie Absolutoffsetwert oder erforderliche Auflösungsparameterwerte für Ist- und Überwachungssollwerte.

Diese Beschränkung, die durch die obengenannten fehlerhaften Datenwerte infolge falscher Dateneingabe oder infolge der unzulässigen Speicherinhaltsveränderung entsteht, ist beseitigt. In jedem Überwachungskanal werden diese Werte aus voneinander unabhängigen Speichern ausgelesen, in die sie ausgehend von unabhängigen Eingaben gespeichert werden. Eine fehlerhafte Eingabe und unzulässige Speicherinhaltsveränderung oder fehlerhaftes Auslesen wird durch den Kanalvergleich sicher erkannt (Einfehlersicherheit), weil diese sicherheitsrelevanten Speicherdaten in den Kanalvergleich einbezogen sind.

### Punkt 7: Beschränkung auf nur Positionsüberwachung.

Die hohe erreichbare Dynamik der inkrementalen Istwerterfassung erlaubt eine sicherheitsgerichtete Drehzahlüberwachung/Geschwindigkeitsüberwachung, aber auch eine Beschleunigungsüberwachung/Momentüberwachung oder Drückkraftüberwachung. Damit kann auch die in der heutigen EU-Maschinenrichtlinie geforderte sichere Einrichtegeschwindigkeit oder auch der Sichere Stillstand realisiert werden. Durch die gleichzeitige Realisierung mehrere gleicher und auch verschiedener Überwachungen wird die Aufwandskostenstruktur für die einzelne Überwachung zu günstigeren Werten hin verändert.

Punkt 8: Beschränkung auf Anbauort der Istwertgeber am Antrieb, weil andernfalls bei gemischten Anbau direkt/indirekt infolge Lose beim Durchfahren der Lose bei Richtungsumkehr die nicht übereinstimmenden Istwerte beim Stand der Technik zu einem Gleichheitsfehler je Kanal mit Auslösung eines Störungssignals und u.U. sogar auch zu einem Überwachungsfehler mit ungewolltem Abschalten führen kann.

Diese Beschränkung besteht nicht mehr, da nach einem Richtungswechsel die Überwachung und der Kanalvergleich für eine vorgebbare Zeit ausgeschaltet werden.

Die Erfindung kann prinzipiell auch für andere Maschinen mit Sicherheitsbedürfnis verwendet werden.

## Patentansprüche

1. Einrichtung zum numerischen Steuern und zur sicherheitsgerichteten Überwachung einer Achse einer Werkzeugmaschine oder eines Roboters, wobei die numerische Lageregelung und die Drehzahl-/Geschwindigkeitsregelung sowie die Überwachungen einer Überwachungsgröße in zwei Kanälen getrennte Prozessor- und Istwerterfassungssysteme aufweisen, **dadurch gekennzeichnet**, daß
1.1 je Achsüberwachungskanal der ermittelte Istwert auf mindestens eine vorgebbare Überwachung (7,8) eines Achszustandes aufgeschaltet wird,
1.2 je Achsüberwachungskanal die zur Bildung des Überwachungsistwertes und die zur Überwachung notwendigen Parameter- und Überwachungswerte, von nur diesem Kanal zugeordneten gesonderten Eingaben geliefert und in zugeordneten Speichern, seien es Speicherblöcke oder Speichermedien (25,26) gespeichert, aufgeschaltet werden,
1.3 der Prozessor eines jeden Achsüberwachungskanals bei einem in diesem Kanal detektiertem unzulässigem Zustand der Achse eine für die auslösende Überwachungsgröße vorgebbare Fehlerreaktion auslöst,
1.4 die Überwachungen (A1,A2,B1,B2,C1,C2,D1,D2) paarweise in beiden Achsüberwachungskanälen, aber je Achsüberwachungskanal einzeln, in Abhängigkeit von einer ihrem Kanal zugeordneten Freigabe-Quelle, freigeschaltet und gesperrt werden,
1.5 in jedem Überwachungskanal für die freigeschalteten Überwachungen die Gleichheit der Überwachungsfuntionalität des eigenen zum anderen Kanal (23,24) überwacht und bei Abweichung eine vorgebbare Fehlerreaktion (16 bis 22) ausgelöst wird

2. Einrichtung nach Anspruch 1, **dadurch gekennzeichnet**, daß der Überwachungswert der Achs-Drehzahlwert und/oder der Achs-Geschwindigkeitswert und/oder der Achs-Beschleunigungswert und/oder ein Achs-Arbeitsfeldbegrenzungswert und/oder ein Achs-Kraftwert und/oder Achs-Schleppabstand und/oder ein Achs-Endlagenwert ist.

3. Einrichtung nach einem der vorstehenden Ansprüche, **dadurch gekennzeichnet**, daß beim kreuzweisen Kanalvergleich insbesondere die zur Bildung des Überwachungsistwertes und die zur Überwachung notwendigen Parameter- und Überwachungswerte, die Istwerte und die Soll/Ist-Vergleichsergenbiswerte miteinander verglichen werden und bei Abweichung von jedem erkennenden Kanal die Fehlerreaktion im numerischen Steuerungssystem ausgelöst wird.

4. Einrichtung nach einem der vorstehenden Ansprüche, **dadurch gekennzeichnet**, daß die Freigabe des Achsbewegungsmodus, z.B. Achsfreigabe, Reglerfreigabe erst dann erfolgt, wenn die angewählten Überwachungen in beiden Kanälen freigeschaltet sind und die Kanalüberwachung keinen Fehler detektiert.

5. Einrichtung nach einem der vorstehenden Ansprüche, **dadurch gekennzeichnet**, daß die Überwachungen in beiden Achsüberwachungskanälen nach Aufschalten veränderter Parameter und Überwachungswerte oder nach einem Fahrtrichtungswechsel oder nach einem Getriebeschalten erst nach einer vorgebbaren Zeit freigeschaltet werden, damit die Überwachungen und der Kanalvergleich in beiden Kanälen mit zusammengehörigen Kanaldaten bzw. Kanalistwerte arbeiten und es nicht zu ungewollten Abschaltungen kommt.

6. Einrichtung nach einem der vorstehenden Ansprüche, **dadurch gekennzeichnet**, daß die Überwachung erst freigeschaltet wird, wenn mindestens einmal nach jedem erneuten Erreichen des Positionsistwert-Zustandes "referenziert" die Fehlerfreihet des Istwertes festgestellt wurde.

7. Einrichtung nach einem der vorstehenden Ansprüche, **dadurch gekennzeichnet**, daß die Tastzeit der Kanalüberwachung das einfache oder ganzzahlig Vielfache der Überwachungstastzeit oder daß die Tastzeit einer Überwachung das einfache oder ganzzahlig Vielfache der Tastzeit einer anderen Überwachung ist.

## Claims

1. Device for the numerical control and the safetyrelated monitoring of an axis of a machine tool or a robot, wherein the numerical position control and the rotational-speed/velocity control and also the systems of monitoring a monitoring variable have separate processor and actual-value acquisition systems in two channels, characterised in that
1.1 the ascertained actual value is applied per axis-monitoring channel to at least one predeterminable monitoring unit (7, 8) pertaining to an axis state;
1.2 the parameter and monitoring values necessary for the formation of the actual monitoring value and the parameter and monitoring values necessary for monitoring purposes, delivered from separate inputs associated only with this channel and stored in associated memories, whether it be in memory blocks or storage media (25, 26), are applied per axis-monitoring channel;
1.3 the processor of each axis-monitoring channel in the case of a non-permissible state of the axis that is detected in this channel triggers an error reaction which can be predetermined for the triggering monitoring variable;
1.4 the monitoring units (A1, A2, B1, B2, C1, C2, D1, D2) are cleared and blocked in pairs in both axis-monitoring channels, but individually per axis-monitoring channel, in dependence on a release source associated with their channel;
1.5 in each monitoring channel for the cleared monitoring units, the equality of the monitoring functionality of that particular channel in respect of the other channel (23, 24) is monitored and in the case of a deviation a predeterminable error reaction (16 to 22) is triggered.

2. Device according to claim 1, characterised in that the monitoring value is the axis rotational-speed value and/or the axis-velocity value and/or the axis acceleration value and/or an axis working field-limitation value and/or an axis force value and/or an axis following error and/or an axis final position value.

3. Device according to one of the preceding claims, characterised in that in the case of the crosswise channel-comparison in particular the parameter and monitoring values necessary for the formation of the actual monitoring value and the parameter and monitoring values necessary for monitoring purposes, the actual values and the setpoint/actual-value comparison result values are compared with each other and in the case of a deviation the error reaction is triggered in the numerical control system by each identifying channel.

4. Device according to one of the preceding claims, characterised in that the release of the axis movement mode, for example axis release, controller release, only occurs when the selected monitoring units are cleared in both channels and the channel-monitoring system does not detect any error.

5. Device according to one of the preceding claims, characterised in that the monitoring units in both axis-monitoring channels after application of changed parameters and monitoring values or after a change in the direction of travel or after a gear change are only cleared after a predeterminable period of time so that the monitoring units and the channel-comparison in both channels operate with related channel data or actual channel values respectively and unintentional cut-offs do not result.

6. Device according to one of the preceding claims, characterised in that the monitoring system is not cleared until at least once after each time the actual position value state "referenced" is attained anew, the freedom of the actual value from errors has been established.

7. Device according to one of the preceding claims, characterised in that the gate time of the channel-monitoring unit is the simple or integral multiple of the monitoring gate time, or in that the gate time of a monitoring unit is the simple or integral multiple of the gate time of another monitoring unit.

## Revendications

1. Dispositif destiné à la commande numérique et à la surveillance orientée sécurité d'un axe d'une machine-outil ou d'un robot, le réglage de position numérique et le réglage de vitesse de rotation/de vitesse, ainsi que les surveillances d'une grandeur à surveiller comportant un système à processeur et un système d'acquisition de valeurs réelles séparées en deux canaux, caractérisé en ce que
1.1 par canal de surveillance d'axe, la valeur réelle déterminée est appliquée à au moins une surveillance (7, 8) pouvant être prescrite d'un état d'axe,
1.2 par canal de surveillance d'axe, les valeurs de paramètre et de surveillance nécessaires à la formation de la valeur réelle de surveillance et à la surveillance, sont fournies par des entrées particulières, associées à ce seul canal et mémorisées dans des unités de mémoire associées, que ce soit des blocs mémoire ou des supports d'enregistrement (25, 26),
1.3 le processeur de chaque canal de surveillance d'axe déclenche une réaction à l'erreur en cause, lors d'un état inadmissible de l'axe, détecté dans ce canal, de la grandeur à surveiller qui provoque le déclenchement,
1.4 les surveillances (A1, A2, B1, B2, C1, C2, D1, D2) sont déconnectées et sont bloquées par paires dans les deux canaux de surveillance d'axe, mais séparées par canal de surveillance d'axe en fonction d'une source de déblocage associée à son canal,
1.5 dans chaque canal de surveillance pour les surveillances déconnectées, la conformité de la fonctionnalité de surveillance du canal séparé par rapport à l'autre canal (23, 24) assure la surveillance et, en cas de décalage, une réaction à l'erreur (16 à 22) en cause est déclenchée.

2. Dispositif selon la revendication 1, caractérisé en ce qu'on a comme valeur de surveillance la valeur de vitesse de rotation d'axe et/ou la valeur de vitesse d'axe et/ou la valeur d'accélération d'axe et/ou une valeur de définition de zone de travail d'axe et/ou une valeur de force d'axe et/ou une distance d'entraînement d'axe et/ou une valeur de fin de course d'axe.

3. Dispositif selon l'une des revendications précédentes, caractérisé en ce que, lors d'une comparaison croisée des canaux, en particulier les valeurs de paramètres et de surveillance destinées à la formation de la valeur réelle de surveillance et nécessaire à la surveillance, les valeurs réelles et les valeurs de consigne/réelles résultant de la comparaison sont comparées les unes aux autres et, en cas de décalage, la réaction à l'erreur du système de commande numérique est déclenchée par chaque canal s'identifiant.

4. Dispositif selon l'une des revendications précédentes, caractérisé en ce que le déblocage du mode de déplacement d'axe, par exemple le déblocage d'axe, résulte du déblocage de réglage lorsque les surveillances sélectionnées dans les deux canaux sont déconnectées et lorsque la surveillance de canal ne détecte aucune erreur.

5. Dispositif selon l'une des revendications précédentes, caractérisé en ce que les surveillances situées dans les deux canaux de surveillance d'axe sont déconnectées après application des paramètres modifiés et des valeurs de surveillance ou après un changement de direction ou après une mise en mouvement, seulement après une durée prescrite, pour que les surveillances et la comparaison de canal dans les deux canaux travaillent avec des données de canal allant de pair, respectivement des valeurs réelles de canal nécessaires et pour que ne se produise pas des interruptions involontaires.

6. Dispositif selon l'une des revendications précédentes, caractérisé en ce que la surveillance n'est déconnectée que si au moins une fois, après chaque nouvelle obtention de l'état de valeur réelle de position "référencé", il y a eu détermination de la valeur réelle exempte d'erreur.

7. Dispositif selon l'une des revendications précédentes, caractérisé en ce que le temps d'application de la surveillance de canal est le multiple simple ou entier du temps d'application de surveillance ou en ce que le temps d'application d'une surveillance est le multiple simple ou entier du temps d'application d'une autre surveillance.
